# EUROPEAN PATENT APPLICATION

(11) **EP 4 752 608 A2**
(43) Date of publication of application: **03.06.2026**
(21) Application number: 26171814.2
(22) Date of filing: 23.03.2023
(51) Int. Cl.: G02B 6/028

(54) **OPTICAL FIBERS WITH IMPROVED BEND PERFORMANCE AND MANUFACTURING METHOD THEREOF**

(30) Priority: 28.03.2022 IN 202211018078
(62) Divisional of application: 23000043.2
(71) Applicant: Sterlite Technologies Limited, Gurugram, Haryana 122102 (IN)
(72) Inventor: MALVIYA, Apeksha, 122102 Gurugram (IN); BALAKRISHNAN, Janarthanan, 122102 Gurugram (IN); GUPTA, Priya, 122102 Gurugram (IN); KUMAR, Shubham, 122102 Gurugram (IN); REDDY, Srinivas, 122102 Gurugram (IN); PANDEY, Anand, 122102 Gurugram (IN)
(74) Representative: Valet Patent Services Limited

(57) **Abstract**

The present disclosure provides a method for performing curing during manufacturing of an optical fibre ribbon. The method performs a first stage of curing and a second stage of curing on a matrix material of the optical fibre ribbon. The first stage of curing is performed using a ribbon die (102) and one or more ultraviolet light emitting diode (UV LED) units (104). Further, the second stage of curing is performed using a source (202) of the one or more ultraviolet lamps (UV lamps) in an UV chamber (204).

## Description

### Field of the Invention

The present disclosure relates to the field of optical fibre ribbon and, in particular, relates to a method for performing curing during manufacturing of an optical fibre ribbon.

### Background of the invention

Optical fibres are widely used for communication over long distances. An optical fibre is a thin flexible fibre with a glass core through which light signals can be sent with very little loss of strength. Generally, the optical fibre consists of a core, a cladding and coating layers for protection. The optical fibres are combined together using a matrix material in the form of an optical fibre ribbon. The optical fibre ribbon is not flexible and require curing using ultraviolet light. Conventionally, the optical fibre ribbon undergoes single stage curing which is capable of making only the matrix material over the optical fibre ribbon flexible. The optical fibre ribbon remains brittle and variations in width of the optical fibre ribbon may be observed after the single stage curing. A US reference US9687875B2 titled as "Curing apparatus employing angled UVLEDs' ' discloses a UVLED apparatus (and related system and method) to provide efficient curing of an optical-fiber coating on a drawn glass fiber.

In light of the above stated discussion, there is a need for method of curing which can overcome the above stated disadvantages.

### SUMMARY OF THE INVENTION

The present disclosure provides a method for performing curing during manufacturing of an optical fibre ribbon. The method performs a first stage curing on a matrix material of the optical fibre ribbon. In addition, the method performs a second stage of curing on the matrix material of the optical fibre ribbon. The first stage of curing is performed using a ribbon die and one or more ultraviolet light emitting diode (UV LED) units. Further, the second stage of curing is performed using a source of the one or more ultraviolet lamps (UV lamps) in an ultraviolet chamber.

A primary object of the present disclosure is to provide a method for performing curing during manufacturing of an optical fibre ribbon.

Another object of the present disclosure is to provide the optical fibre ribbon that is easily bendable in non-preferential axis without any fragility.

Yet another object of the present disclosure is to provide the optical fibre ribbon with improved flexibility and resilience.

Yet another object of the present disclosure is to maintain width and height of the optical fibre ribbon without any variations.

In an embodiment of the present disclosure, the one or more ultraviolet light emitting diode (UV LED) units (104) performs 80 percent of curing of the matrix material of the optical fibre ribbon in the first stage of curing.

In an embodiment of present disclosure, the ultraviolet chamber (204) performs 20 percent of curing of the matrix material of the optical fibre ribbon in the second stage of curing.

In an embodiment of the present disclosure, the one or more ultraviolet light emitting diode (UV LED) units emit electromagnetic radiations towards the optical fibre ribbon to perform the first stage of curing of the matrix material of the optical fibre ribbon.

In an embodiment of the present disclosure, the source of the one or more ultraviolet lamps (UV lamps) emits electromagnetic radiations towards the optical fibre ribbon to perform the second stage of curing of the matrix material of the optical fibre ribbon.

In an embodiment of the present disclosure, power output in the second stage of curing is in range of about 1000 watts to 1300 watts.

In an embodiment of the present disclosure, the one or more ultraviolet light emitting diode (UV LED) units emit electromagnetic radiations of wavelength in range of about 365 nanometer to 450 nanometer in the first stage of curing.

In an embodiment of the present disclosure, the one or more ultraviolet light emitting diode (UV LED) units are situated at a distance in range of about 5 millimeter to 40 millimeter from head of the ribbon die in the first stage of curing.

In an embodiment of present disclosure, the one or more ultraviolet light emitting diode (UV LED) units produce power output based on operating wavelength in range of about 1200 watts to 10000 watts in the first stage of curing.

In an embodiment of present disclosure, each lamp of the one or more ultraviolet light emitting diode (UV LED) units is incident on the optical fibre ribbon at an angle in range of about 35 degrees to 80 degrees in the first stage of curing.

### BRIEF DESCRIPTION OF DRAWING

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
FIG. 1 illustrates a cross sectional view for performing first stage of curing during manufacturing of the optical fibre ribbon, in accordance with an embodiment of the present disclosure; and
FIG. 2 illustrates a cross sectional view for performing second stage of curing during manufacturing of the optical fibre ribbon, in accordance with various embodiments of the present disclosure.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
100. Cross sectional view for performing a first stage of curing during manufacturing of an optical fibre ribbon.
102. A ribbon die.
104. UV LED units.
200. Cross sectional view for performing a second stage of curing during manufacturing of an optical fibre ribbon.
202. Source.
204. UV chamber.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

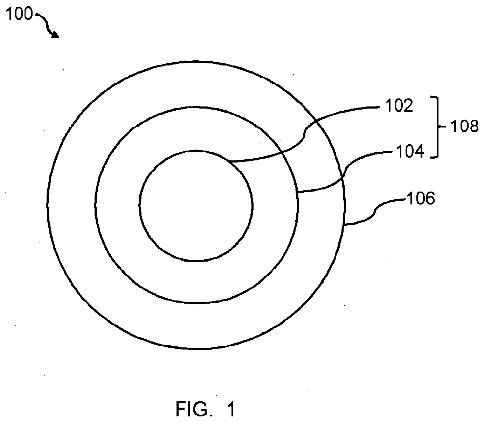

Referring to FIG. 1 , this is a cross sectional view for the first stage of the method for performing curing during manufacturing of an optical fibre ribbon 100, in accordance with an embodiment of the present disclosure. The cross sectional view for the first stage of the method for performing curing during manufacturing of an optical fibre ribbon 100 includes a ribbon die 102, and one or more ultraviolet light emitting diode (hereinafter UV LED) units 104.

The ribbon die 102 and the one or more UV LED units 104 collectively performs the first stage of the method for performing curing during manufacturing of an optical fibre ribbon 100. The first stage of the method for performing curing during manufacturing of an optical fibre ribbon 100 is performed on a matrix material of the optical fibre ribbon. In general, optical fibre ribbon includes a number of optical fibres arranged together within matrix material. In general, matrix material is made up of UV curable acrylate based resins. In addition, matrix material provides optimal handling characteristics such as superior heat strip, encapsulation, easy peel and breakout, good fibre geometry and robustness to optical fibre ribbon. Further, each optical fibre ribbon includes a plurality of optical fibres. In general, optical fibre refers to a medium associated with transmission of information over long distances in the form of light pulses. Moreover, optical fibre uses light to transmit voice and data communications over long distances.

The ribbon die 102 is utilized to hold the optical fibre ribbon. The optical fibre ribbon includes a plurality of optical fibres. In general, die is a specialized tool used in manufacturing industries to cut or shape material mostly using a press. In addition, dies are generally customized to the item they are used to create. In an embodiment of the present disclosure, the ribbon die 102 is a junction where grouping of the plurality of optical fibres takes place. In addition, the ribbon die 102 is used to group each of the plurality of optical fibres with facilitation of the matrix material. Further, the matrix material flows inside the ribbon die 102 that results into first stage of curing. Furthermore, the first stage of curing is pre-curing followed by post-curing of the optical fibre ribbon.

In general, a light emitting diode lamp is an electric light source for use in light fixtures that produces light using one or more light-emitting diodes. In addition, a light emitting diode is a semiconductor light source that emits light when current flows through it. Further, UV lamp stands for ultraviolet lamp. In general, ultraviolet lamp is a device for producing electromagnetic radiations in the wavelengths between those of visible light and X-rays. In addition, UV lamp is a lamp that emits electromagnetic radiations that makes black-light posters glow.

The one or more UV LED units 104 are situated directly after the ribbon die 102. The one or more UV LED units 104 are configured to emit electromagnetic radiations towards the optical fibre ribbon to perform curing of the matrix material of the optical fibre ribbon. In an embodiment of the present disclosure, the optical fibre ribbon is placed stationary between the one or more UV LED units 104. In another embodiment of the present disclosure, the optical fibre ribbon passes through the one or more UV LED units 104.

The one or more UV LED units 104 are situated at distance in range of 5 millimeter to 40 millimeter from the ribbon die 102. In an embodiment of the present disclosure, distance of the one or more UV LED units 104 from the ribbon die 102 may vary. In an embodiment of the present disclosure, the LED segment of UV LED unit 104 has a width ranges in between 50 mm to 120 mm. In another embodiment of the present disclosure, the width range of the LED segment of UV LED unit 104 may vary. In addition, power output emitted by the one or more UV LED units 104 decreases exponentially as distance of the optical fibre ribbon from the one or more UV LED units 104 increases. In an embodiment of the present disclosure, light emitted from each lamp of the one or more UV LED units 104 is incident on the optical fibre ribbon at an angle in range of about 35 degrees to 80 degrees. In another embodiment of the present disclosure, angle of incidence of light emitted from each lamp of the one or more UV LED units 104 may vary.

The one or more UV LED units 104 emit electromagnetic radiations to perform pre-curing of the matrix material of the optical fibre ribbon. In addition, pre-curing of the matrix material of the optical fibre ribbon is performed to maintain a fibre spacing between each of the plurality of optical fibres. Further, the matrix material present in between each of the plurality of optical fibres is cured. Furthermore, the matrix material present between each of the plurality of optical fibres is placed at top surface and bottom surface of the ribbon die 102. The one or more UV LED units 104 emit electromagnetic radiations of wavelength in range of about 365 nanometer to 450 nanometer. In an embodiment of the present disclosure, wavelength of electromagnetic radiations emitted from the one or more UV LED units 104 may vary.

The one or more UV LED units 104 produces a power output. In general, power is rate of doing work or transferring heat. In addition, power is amount of energy transferred or converted per unit time. The one or more UV LED units 104 produce the power output in range of about 1200 watts to 10000 watts based on wavelength on which the one or more UV LED units 104 operate upon. In an embodiment of the present disclosure, the power output of the one or more UV LED units 104 may vary. Further, the power output corresponds to illumination intensity. In general, illumination intensity or luminous intensity is a measure of wavelength-weighted power emitted by a light source in a particular direction per unit solid angle.

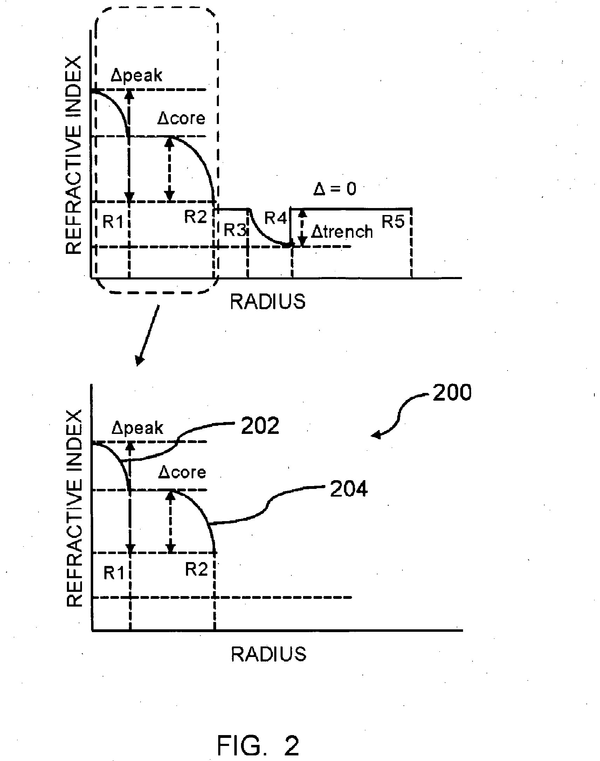

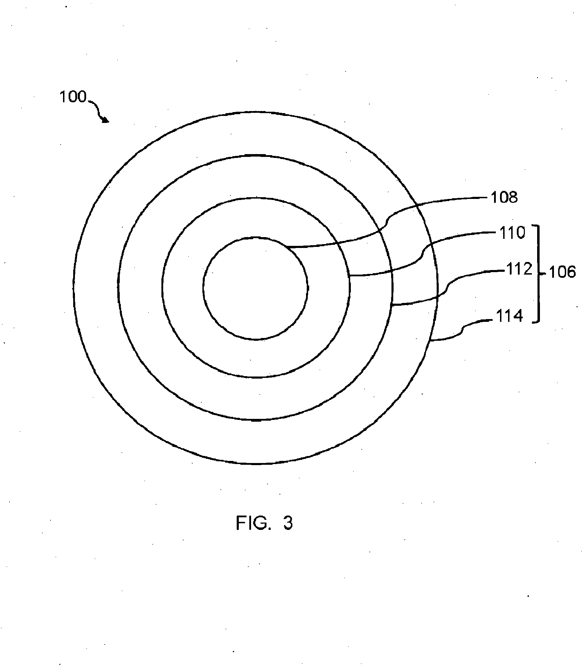

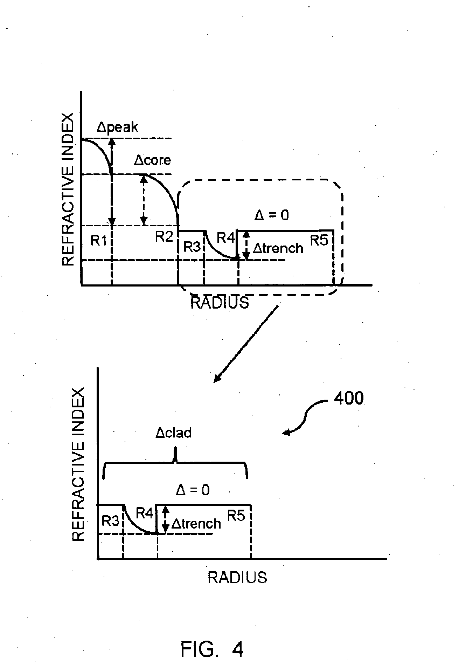

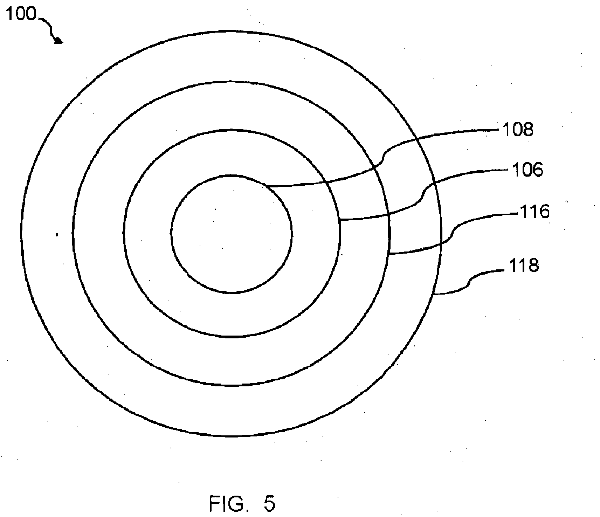

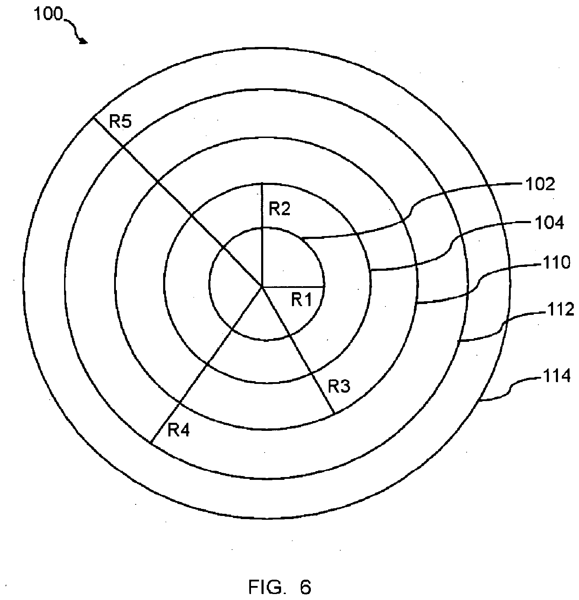

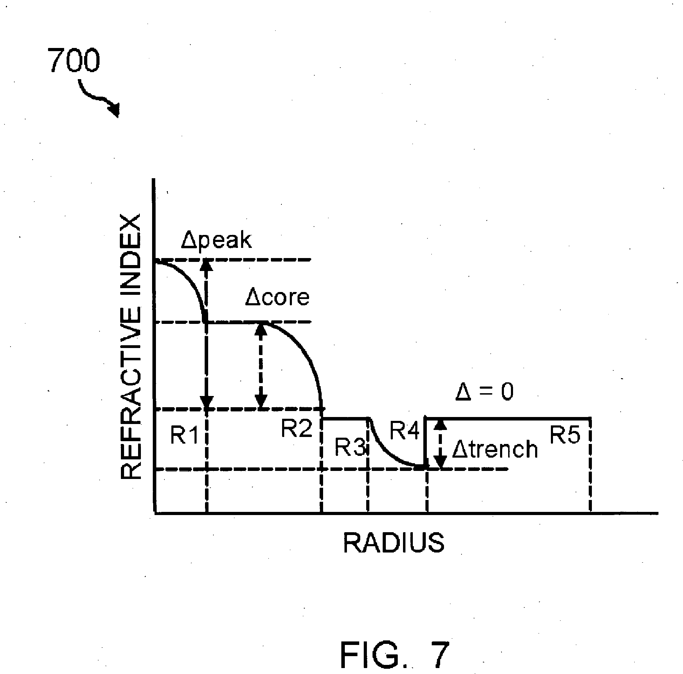

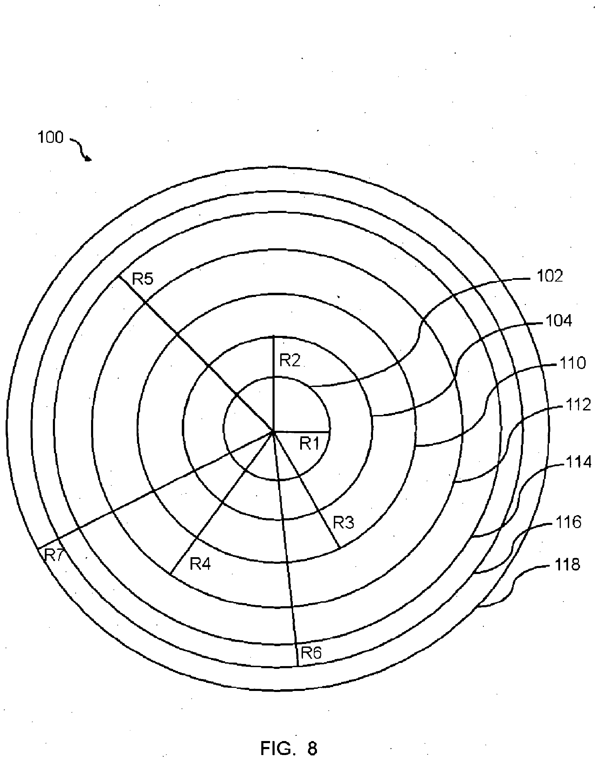

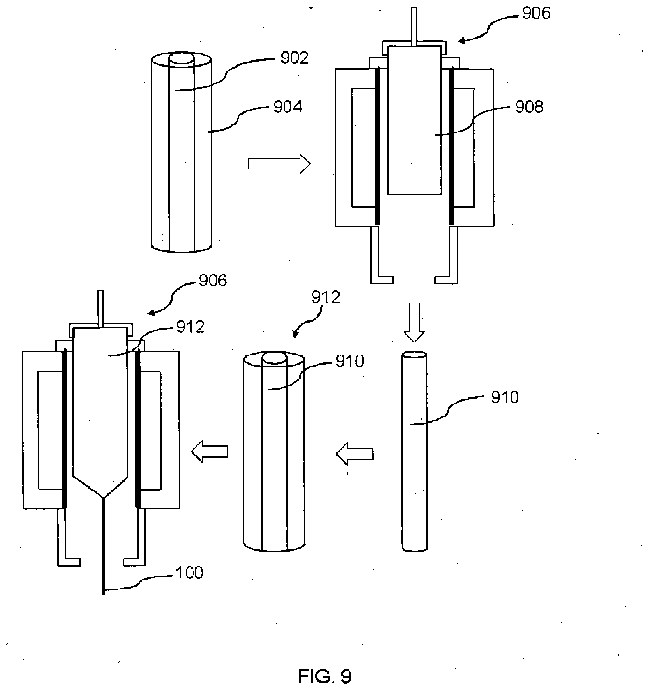

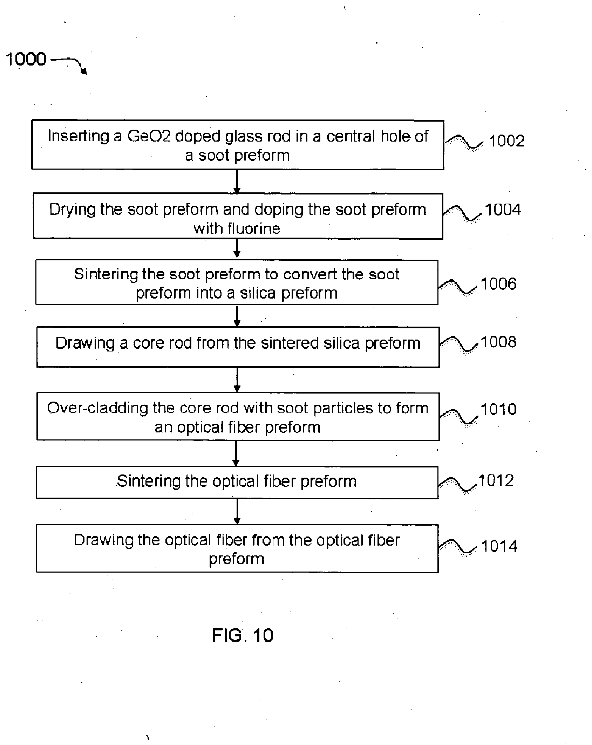

Referring to FIG. 2 , this is a cross sectional view for the second stage of the method for performing curing during manufacturing of an optical fibre ribbon 200, in accordance with various embodiments of the present disclosure. The cross sectional view for the second stage of the method for performing curing during manufacturing of an optical fibre ribbon 200 includes a source 202 of the one or more UV lamps in a UV chamber 204.

The UV chamber 204 is required for the second stage of the method for performing curing during manufacturing of an optical fibre ribbon 200. The second stage of the method for performing curing during manufacturing of an optical fibre ribbon 200 is post-curing of the matrix material of the optical fibre ribbon. In addition, the UV chamber 204 cures 20 percentage of curing.

The UV chamber 204 performs the second stage of the method for performing curing during manufacturing of an optical fibre ribbon 200. The second stage of the method for performing curing during manufacturing of an optical fibre ribbon 200 is post-curing of the matrix material of the optical fibre ribbon. The source 204 of the one or more UV LED units 104 emits electromagnetic radiations towards the optical fibre ribbon to perform the second stage of the method for performing curing during manufacturing of an optical fibre ribbon 200 of the matrix material of the optical fibre ribbon.

The power output from the second stage of curing is in range of about 1000 watts to 1300 watts. In an embodiment of the present disclosure, the power output from the second stage of curing may vary.

The UV lamp of UV chamber 204 has a width ranges in between 30 cm to 100 cm. In an embodiment of the present disclosure, the width of the UV lamp of UV chamber 204 may vary. Further, the UV chamber (204) includes UV lamp, quartz tube, reflector plates, filtering system, etc.

The first stage of the method for performing curing during manufacturing of an optical fibre ribbon 100 and the second stage of the method for performing curing during manufacturing of an optical fibre ribbon 200 facilitates bending of the optical fibre ribbon in non-preferential axis without any fragility. In an embodiment of the present disclosure, the one or more ultraviolet light emitting diode (UV LED) units 104 performs 80 percent of curing of the matrix material of the optical fibre ribbon in the first stage of curing. In an embodiment of the present disclosure, the ultraviolet chamber 204 performs 20 percent of curing of the matrix material of the optical fibre ribbon in the second stage of curing.

The first stage of the method for performing curing during manufacturing of an optical fibre ribbon 100 and the second stage of the method for performing curing during manufacturing of an optical fibre ribbon 200 have numerous advantages over the prior art. The first stage of the method for performing curing during manufacturing of an optical fibre ribbon 100 and the second stage of the method for performing curing during manufacturing of an optical fibre ribbon 200 increases flexibility of the optical fibre ribbon. The first stage of the method for performing curing during manufacturing of an optical fibre ribbon 100 and the second stage of the method for performing curing during manufacturing of an optical fibre ribbon 200 facilitates to improve resilience of the optical fibre ribbon. The first stage of the method for performing curing during manufacturing of an optical fibre ribbon 100 and the second stage of the method for performing curing during manufacturing of an optical fibre ribbon 200 maintains width of the optical fibre ribbon without any variations.

Although, the present disclosure has been explained in relation to its preferred embodiment(s) as mentioned above, it is to be understood that many other possible modifications and variations can be made without departing from the scope of the inventive aspects of the present invention. It is, therefore, contemplated that the appended claim or claims will cover such modifications and variations that fall within the true scope of the invention.

### Clauses

1. An optical fiber (100) characterized in that:
   a core region (108) defined by a core refractive index profile (200), wherein the core region (108) has a first core (102) defined by a first core refractive index (RI) profile (202) and a first core RI max (Δpeak) and a second core (104) defined by a second core RI profile (204) and a second core RI max (Δcore), wherein the first core RI max (Δpeak) is greater than the second core RI max (Δcore); and
   a cladding region (106) surrounding the core region (108), wherein the cladding region (106) is defined by a cladding refractive index profile (400) and a cladding RI max (Δclad), wherein the first core RI max (Δpeak) is greater than the second core RI max (Δcore) and the second core RI max (Δcore) is greater than the cladding RI max (Δclad).
2. The optical fiber (100) as claimed in clause 1, wherein an absolute difference between the first core RI max (Δpeak) and the second core RI max (Δcore) is between 0.02 to 0.14.
3. The optical fiber (100) as claimed in clause 1, wherein the cladding region (106) further comprising a first cladding (110), a second cladding (112) and a third cladding (114).
4. The optical fiber (100) as claimed in clause 1, wherein the first cladding (110) and the third cladding (114) have pure silica and the second cladding (112) has down-doped silica.
5. The optical fiber (100) as claimed in clause 1, wherein a ratio of the second core RI max (Δcore) to the first core RI max (Δpeak) is in a range between 0.8 and 0.9.
6. The optical fiber (100) as claimed in clause 1, wherein the first core (102) and the second core (104) are up-doped.
7. The optical fiber (100) as claimed in clause 1, wherein each of the first core (102) and the second core (104) is defined by a radial dimension, wherein the radial dimension (R1) of the first core (102) is in a range between 0.5µm and 1.5µm and the radial dimension (R2) of the second core (104) is in a range between 4.4µm and 4.8µm.
8. The optical fiber (100) as claimed in clause 1, wherein each of a first cladding (110), a second cladding (112) and a third cladding (114) is defined by a radial dimension, wherein the radial dimension (R3) of the first cladding (110) is in a range of 7.5µm and 8.5µm, the radial dimension (R4) of the second cladding (112) is in a range of 12µm and 16µm and the radial dimension (R5) of the third cladding (114) is in a range of 45µm and 50.5µm.
9. The optical fiber (100) as claimed in clause 1, wherein the optical fiber (100) has a dispersion less than or equal to 18ps/nm-km at 1550nm wavelength, an MFD (mode field diameter) of 8.6±0.4µm at 1310nm wavelength and a cable cut-off wavelength of less than or equal to 1260nm.
10. The optical fiber (100) as claimed in clause 1, wherein the optical fiber (100) has:
   a macro-bend loss of less than or equal to 0.03dB per 10 turns at 15mm radius and at 1550nm wavelength and a macro-bend loss of less than or equal to 0.1dB per 10 turns at 15mm radius and at 1625nm wavelength;
   a macro-bend loss of less than or equal to 0.1dB/turn at 10mm radius and at 1550nm wavelength and a macro-bend loss of less than or equal to 0.2dB/tum at 10mm radius and at 1625nm wavelength; and
   a macro-bend loss of less than or equal to 0.2dB/tum at 7.5mm radius and at 1550nm wavelength and a macro-bend loss of less than or equal to 0.5dB/tum at 7.5mm radius and at 1625nm wavelength.
11. The optical fiber (100) as claimed in clause 1, wherein the optical fiber (100) has a Young's modulus for a primary coating layer (116) between 0.0002GPa and 0.0004GPa and a Young's modulus for a secondary coating layer (118) between 1.1Gpa and 1.7Gpa.
12. A method of manufacturing the optical fiber (100) characterized in that steps of:
   inserting a GeO2 doped glass rod (902) in a central hole of a soot preform (904);
   drying the soot preform (904) and doping the soot preform (904) with fluorine;
   sintering the soot preform (904) to convert the soot preform into a silica preform (908);
   drawing a core rod (910) from the sintered silica preform (908);
   over-cladding the core rod (910) with soot particles to form an optical fiber preform (912);
   sintering the optical fiber preform (912); and
   drawing the optical fiber (100) from the optical fiber preform (912).
13. The method as claimed in clause 12, wherein the GeO2 doped glass rod (902) is a central rod having a diameter in a range of 5mm-10 mm.
14. The method as claimed in clause 12, wherein an absolute difference between the first core RI max (Δpeak) and the second core RI max (Δcore) is between 0.02 to 0.14.
15. The method as claimed in clause 12, wherein a ratio of the second core RI max (Δcore) to the first core RI max (Δpeak) is in a range between 0.8 and 0.9.

## Claims

1. A method for performing curing during manufacturing of an optical fibre ribbon, the method comprising:
a first stage of curing on a matrix material of the optical fibre ribbon using a ribbon die (102) and one or more ultraviolet light emitting diode (UV LED) units (104), wherein the UV LED units (104) are situated at a distance in a range of about 5 millimeter to 40 millimeter from a head of the ribbon die (102); and
a second stage of curing on the matrix material of the optical fibre ribbon using one or more ultraviolet lamps (UV lamps) in an ultraviolet chamber (204);
**characterized in that**:
the UV LED units (104) are operated at a power output in a range of about 1200 watts to 10000 watts to perform substantially 80 percent of curing of the matrix material in the first stage; and
the UV lamps in the second stage are operated at a power output in a range of about 1000 watts to 1300 watts to perform substantially 20 percent of curing of the matrix material in the second stage.

2. The method according to claim 1, wherein light emitted from each lamp of the one or more UV LED units (104) is incident on the optical fibre ribbon at an angle in a range of about 35 degrees to 80 degrees in the first stage of curing.

3. The method according to claim 1, wherein the one or more UV LED units (104) emit electromagnetic radiations of a wavelength in a range of about 365 nanometer to 450 nanometer in the first stage of curing.

4. The method according to claim 1, wherein the distance of about 5 millimeter to 40 millimeter is selected such that the power output of the UV LED units (104) is maintained at a level sufficient to achieve the substantially 80 percent of curing, wherein the power output decreases exponentially as a distance of the optical fibre ribbon from the UV LED units (104) increases.

5. The method according to claim 1, wherein the substantially 80 percent of curing in the first stage is performed to maintain a fibre spacing between each of a plurality of optical fibres.

6. The method according to claim 1, wherein the matrix material is comprised of UV curable acrylate based resins.

7. The method according to claim 1, wherein the ribbon die (102) is a junction where grouping of a plurality of optical fibres takes place with the facilitation of the matrix material.

8. The method according to claim 1, wherein the matrix material flows inside the ribbon die (102) to facilitate the initiation of the first stage of curing.

9. The method according to claim 1, wherein the matrix material present between each of a plurality of optical fibres is placed at a top surface and a bottom surface of the ribbon die (102) during the first stage of curing.

10. The method according to claim 1, wherein the ultraviolet chamber (204) includes at least a UV lamp, a quartz tube, reflector plates, and a filtering system.

11. The method according to claim 1, wherein the first stage and the second stage are performed collectively to increase flexibility, improve resilience, and maintain a width of the optical fibre ribbon without variations.

12. An optical fibre ribbon comprising a plurality of optical fibres arranged within a matrix material, obtained by the method of any of claims 1 to 11, **characterized in that** the optical fibre ribbon is a flexible, rollable ribbon exhibiting easy breakout.

13. The optical fibre ribbon according to claim 12, wherein a fibre spacing between each of the plurality of optical fibres is fixed by the substantially 80 percent curing of the first stage.

14. The optical fibre ribbon according to claim 12, wherein the matrix material present between each of the plurality of optical fibres is cured in the first stage to provide internal structural stability during bending.
